(19) **Europäisches Patentamt**

**European Patent Office**

**Office européen des brevets**

(11) **EP 1 209 400 B1**

(12) **EUROPÄISCHE PATENTSCHRIFT**

(45) Veröffentlichungstag und Bekanntmachung des Hinweises auf die Patenterteilung:
**20.07.2005 Patentblatt 2005/29**

(51) Int Cl.$^7$: **F16L 9/147**

(21) Anmeldenummer: **01126553.5**

(22) Anmeldetag: **15.11.2001**

(54) **Mehrlagiges Metallrohr zum Leiten von Fluiden**

Multi-layered tube for conveying fluids

Tube métallique à plusieurs couches pour convoyer de la matière fluide

(84) Benannte Vertragsstaaten:
**AT BE CH CY DE DK ES FI FR GB GR IE IT LI LU MC NL PT SE TR**

(30) Priorität: **17.11.2000 DE 10057144**

(43) Veröffentlichungstag der Anmeldung:
**29.05.2002 Patentblatt 2002/22**

(73) Patentinhaber: **Metallglanz Gesellschaft für Entgratung und Oberflächentechnik mbH 75417 Mühlacker (DE)**

(72) Erfinder:
• **Von Hofmann, Timm 75417 Mühlacker (DE)**

• **Roeher, Andreas, Dr. 09116 Chemnitz (DE)**

(74) Vertreter: **Borchert, Uwe Rudolf, Dipl.-Ing. et al Puschmann & Borchert Patentanwälte Bajuwarenring 21 82041 München/Oberhaching (DE)**

(56) Entgegenhaltungen:
**WO-A-98/36899     DE-B- 10 057 144
DE-C- 19 752 081     DE-U- 29 919 527
US-A- 5 771 940**

**Beschreibung**

Die Erfindung betrifft eine Rohranordnung zum Leiten von Fluiden mit einem mehrlagigen Metallrohr gemäß der im Oberbegriff der Ansprüche 1 und 2 angegebenen Art.

Derartige Rohranordnungen sind seit langem für viele Anwendungsgebiete bekannt und werden insbesondere in der Automobilindustrie zum Leiten von Bremsflüssigkeit, Öl oder ähnlichem in einem Kraftfahrzeug verwendet. Solche Rohranordnungen sind auch unterhalb des Fahrzeugs angeordnet. Sie sind daher extremen Umwelteinwirkungen ausgesetzt. Die Rohranordnung muss daher korrosionsbeständig, einen ausreichenden Schutz vor mechanischer Einwirkung sowie eine hohe Festigkeit aufweisen.

Beispielsweise ist die Rohranordnung Streusalz ausgesetzt, da im Winter auf die Straßen Streusalz aufgebracht wird, um das Gefrieren von Wasser auf der Straßenoberfläche zu verhindern. Hierdurch wird das Problem der Korrosion noch verschärft.

Zudem ist die Rohranordnung insbesondere durch Streusplitt vor allem mechanischen Einwirkungen ausgesetzt. Der Splitt wird beispielsweise durch die sich drehenden Räder des Kraftfahrzeuges auch noch beschleunigt. Es ist daher notwendig, dass die Rohranordnung unterhalb des Kraftfahrzeugs so beschichtet wird, dass sie sowohl geschützt ist vor jedweder Art von Korrosion als auch vor mechanischer Einwirkung.

Es ist beispielsweise aus der US-A-5,771,940 bekannt, eine solche mehrlagige Rohranordnung mit einer Zinkschicht, dann mit einer Chromatschicht, mit einer Zwischenschicht aus Epoxid und einer äußeren Schicht aus Nylonmaterialien, thermoplastischen Elastomeren, Fluorpolymeren und Gemischen davon zu versehen. Die Zwischenschicht ist notwendig, da die äußere Schicht beispielsweise aus Nylonmaterialien nicht an der darunter liegenden Schicht aus Metall, Oxiden, Chromat oder ähnlichem haftet. Es ist daher eine Schicht notwendig, die die Haftung zwischen der Nylonschicht und der darunter liegenden Schicht aus Metall, Oxiden, Chromat oder ähnlichem ermöglicht. Diese Schicht wird Primer genannt und z.B. durch Epoxid gebildet.

Des Weiteren sind mehrlagige Metallrohre bekannt, die aus einem verkupferten Stahlband geformt werden. Das verkupferte Stahlband wird in einem mehrstufigen Formprozess beispielsweise zu einem Zweilagenrohr geformt und wärmebehandelt, damit die Lagen des geformten Stahlbandes miteinander verlötet werden. Anschließend wird dieses Rohr mit einer Zinkschicht versehen, auf die eine Chromatschicht aufgebracht wird. Die Chromatschicht dient zur Verbesserung der Haftverbindung mit einer daran sich anschließenden Schicht. Das Aufbringen der Chromatschicht hat den Nachteil, das Chrom mit einer Valenz von sechs verwendet wird, was sehr giftig ist. Trotzdem ist die Chromatschicht sehr widerstandsfähig gegen Korrosion. Jedoch wird diese bei plastischer Verformung des Rohrs beschädigt.

Es hat sich jedoch gezeigt, dass die bekannten Rohranordnungen ein hohes Gewicht aufweisen und es bei einer Beschädigung der Schichten zu einer schnell fortschreitenden Korrosion im Metallrohr kommt.

Es ist allgemein bekannt, als umweltschonende Alternative zu Eisenphosphortierung/Chromatierung auf der Basis von Silanen ein chromfreies Vorbehandlungsverfahren zu verwenden, das sich für die Behandlung verschiedener Metallsubstrate eignet und gute Haftungs- und Korrosionsschutzeigenschaften bietet.

Die toxikologischen und umwelttechnischen Probleme der Chromatierung hat zur Entwicklung dieses neuen Systems für die Vorbehandlung von Metallen geführt. Hierbei werden die bekannten Chromatier- und Phosphorsierungssysteme durch Silansysteme ersetzt. Die Oxilanprodukte können unter Verwendung der bekannten Auftragsmethoden, wie Sprühen, Tauchen, Abquetschen und Rollcoaten angewandt werden. Die Produkte werden als Konzentrate vertrieben und erfordern eine Verdünnung mit entsalztem Wasser. Die Lösung kann bei Umgebungstemperatur angewandt werden. Eine sachgemäße Reinigung ist für eine gute Benetzung mit der Behandlungslösung unerlässlich. Nach der Reinigung und dem Sprühen mit Wasser kann das Produkt sofort aufgebracht und getrocknet werden. Die Trocknung kann bei Raumtemperatur und höheren Temperaturen erfolgen (70 bis 80 °C). Die Stärke der Silanschicht von normalerweise 50 bis 100 nm hängt von der Oxisilan-Konzentration ab und ist unabhängig von der Kontaktzeit. Eines der Hauptvorteile des Verfahrens liegt in dem umwelt- und arbeitsplatzfreundlichen Profil der Silane. In der Regel werden die Produkte nur als irritierend eingestuft. Da der Auftrag bei Raumtemperatur erfolgen kann, entstehen keine Kosten für das Aufheizen der Vorbehandlungslösung. Außerdem ist der Wasserverbrauch denkbar gering, da es sich um ein "No-Rinse"-Verfahren handelt.

Ein weiterer Vorteil ist die Anwendbarkeit auf einer großen Bandbreite von Metallen.

Die hier zum Einsatz kommenden Silane werden durch die allgemeine Formel R-Si(OX)$_3$ charakterisiert, wobei es sich bei OX um eine Alkoxy-Gruppe handelt. Damit ein Silan auf der Oberfläche aktiv sein kann, muss es zunächst zu einem Silanol hydrolysiert werden:

$$R\text{-}Si(OX)_3 + 3H_2O \leftrightarrow R\text{-}Si(OH)_3 + 3XOH$$

Dieses Hydrolysat sollte bei einem pH < 7 gehalten werden, um eine Kondensation gemäß nachfolgender

Reaktionsgleichung zu vermeiden:

$$R\text{-}Si(OH)_3+R\text{-}Si(OH)_3\leftrightarrow R\text{-}Si(OH)_2\text{-}O\text{-}Si(OH)_2\text{-}R+H_2O$$

Nach dem Trocknen reagiert das Silan-Hydrolysat mit den auf der Metalloberfläche vorhandenen Metalloxiden bzw. -hydroxiden:

$$R\text{-}Si\,(OH)_3+Metall\text{-}OH\leftrightarrow Metall\text{-}O\text{-}Si(OH)_2\text{-}R+H_2O$$

Je nach Art des Silans kann der organische Rest R zum Beispiel eine funktionelle Gruppe enthalten, die zu einer Verbesserung der Schichthaftung führt.

Der Erfindung liegt die Aufgabe zugrunde, eine Rohranordnung zum Leiten von Fluiden mit einem mehrlagigen Metallrohr gemäß der im Oberbegriff des Anspruches 1 angegebenen Art derart weiterzubilden, dass unter Vermeidung der genannten Nachteile die Sicherheit gegen Korrosion weiter erhöht wird.

Diese Aufgabe ist durch die jeweiligen Merkmale der Ansprüche 1 und 2 gelöst. Weitere Merkmale der Erfindung ergeben sich aus den Unteransprüchen.

Der Erfindung liegt die Erkenntnis zugrunde, dass Nichteisenmetalle eine geringere Korrosionsanfälligkeit aufweisen und dadurch die Sicherheit gegen Korrosion auf einfache Weise erhöht werden kann. Zudem sind Nichteisenmetalle leichter bauend, sodass auch Gewichtsersparnisse erreicht werden. Dies ist insbesondere im Hinblick auf die für die Kraftstoffreduzierung im Automobilbau geforderte Leichtbauweise in Kraftfahrzeugen entscheidend.

Nach der Erfindung ist daher das Metallrohr aus Aluminium oder einer Aluminiumlegierung gebildet. Auch bei Beschädigung der Beschichtung wird hierdurch die Korrosion stark eingeschränkt, da die Korrosion nur sehr langsam fortschreitet. Zudem wird das Gewicht der Rohranordnung erheblich verringert.

Damit die Rohranordnung vor mechanischen Einwirkungen geschützt ist, besteht die äußere Schicht aus Nylonmaterialien, thermoplastischen Elastomeren, Fluorpolymeren und Gemischen davon.

Gemäß der Erfindung ist zumindest die die äußere Fläche des Metallrohrs überdeckende erste Schicht eine Nickelschicht, mit einer vorzugsweisen Schichtdicke von 3 bis 10 µm. Da das mehrlagige Metallrohr aus einem Metallband gebildet wird, auf das die erste Schicht galvanisch aufgebracht ist. Die erste Schicht dient auch als Lot zum Verbinden der einzelnen Lagen des Metallrohrs bei der Formgebung in der Wärmebehandlung.

Die aus Nickel oder einer Nickellegierung bestehende erste Schicht kann Zusätze zum Verbessern der Verbindung mit dem Metallrohr enthalten , wie Schwefel, Phosphor oder ähnliches.

Die die erste Schicht überdeckende zweite Schicht kann aus Metall oder Oxisilan gebildet sein. Ist die Schicht als Metallschicht ausgebildet, wird sie beispielsweise galvanisch aufgebracht. Ansonsten kann sie auch durch ein Oberflächenbehandlungsverfahren, also durch chemische Reaktion, erzeugt werden.

Die dritte Schicht kann aus Oxisilan bestehen, wobei die dritte Schicht insbesondere durch ein Oberflächenbehandlungsverfahren, also durch chemische Reaktion, gebildet wird. Alternativ hierzu kann die dritte Schicht auch zum Verbessern der Haftverbindung zwischen der zweiten Schicht und der äußeren Schicht - Primer - dienen und insbesondere dabei aus Epoxid bestehen.

Die die dritte Schicht bedeckende vierte Schicht dient zum Verbessern der Haftverbindung zwischen der dritten Schicht und der äußeren Schicht - Primer - und besteht dabei aus Epoxid.

Die Rohranordnung nach der Erfindung wird insbesondere bei Kraftfahrzeugen verwendet, beispielsweise als Bremsflüssigkeitsleitung, Hydraulikleitung oder ähnliches.

Weitere Vorteile und Merkmale werden anhand der folgenden Beschreibung mehrerer Ausführungsformen der Erfindung im Zusammenhang mit der Zeichnung dargestellt. Es zeigen:

Fig. 1     eine perspektivische Schnittansicht durch eine Rohranordnung gemäß einer ersten Ausführungsform der Erfindung, und

Fig. 2     eine perspektivische Schnittansicht durch eine Rohranordnung gemäß einer zweiten Ausführungsform der Erfindung.

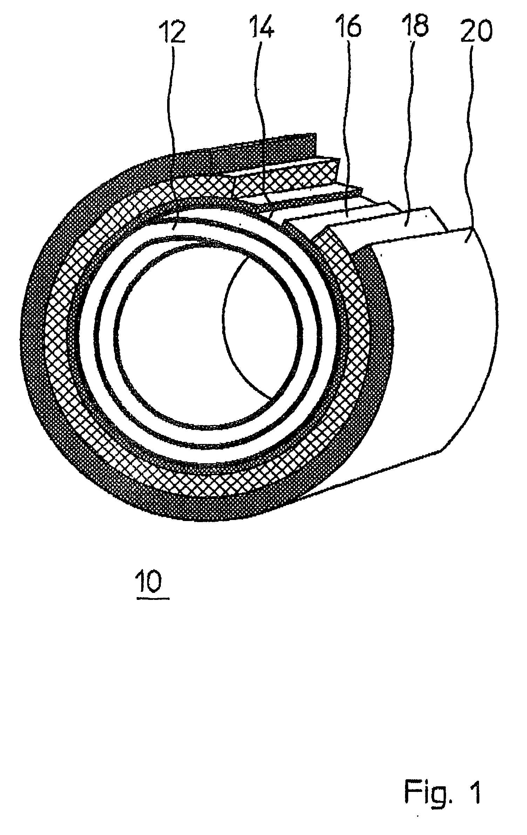

In Fig. 1 ist eine Rohranordnung 10 dargestellt, die aus einem zweilagigen Metallrohr 12 besteht. Das Metallrohr 12 wird aus einem Band aus einer Aluminiumlegierung gefertigt, wobei zuvor auf das Band eine erste Schicht 14 galvanisch aufgebracht wird.

Die erste Schicht 14 besteht aus Nickel oder einer Nickellegierung und enthält Zusätze zum Verbessern der Verbindung mit dem Metallrohr 12, wie Schwefel, Phosphor oder ähnliches. Die erste Schicht 14 dient zugleich als Lot.

Das Band aus der Aluminiumlegierung mit der ersten Schicht 14 wird in mehreren Stufen in die in Fig. 1 dargestellte Form gebracht und anschließend wärmebehandelt, sodass die erste Schicht 14 als Lot die einzelnen Lagen des Metallrohrs 12 verbindet. Die erste Schicht 14 ist dann auch vollständig auf der Außenfläche des Metallrohrs 12 angeordnet.

Auf die erste Schicht 14 ist eine die erste Schicht bedeckende zweite Schicht 16 aufgebracht. Die zweite Schicht 16 wird durch Oxisilan gebildet. Auf die zweite Schicht 16 ist eine diese bedeckende dritte Schicht 18 - Primer - aufgebracht, die zum Verbessern der Haftverbindung zwischen der zweiten Schicht 16 und der äußeren Schicht 20 dient. Die dritte Schicht 18 umfasst dabei Epoxid. An die dritte Schicht 18 schließt sich eine diese überdeckende vierte Schicht 20 an, die aus einem Nylonmaterial besteht. Die vierte Schicht 20 bildet somit die äußere Schicht.

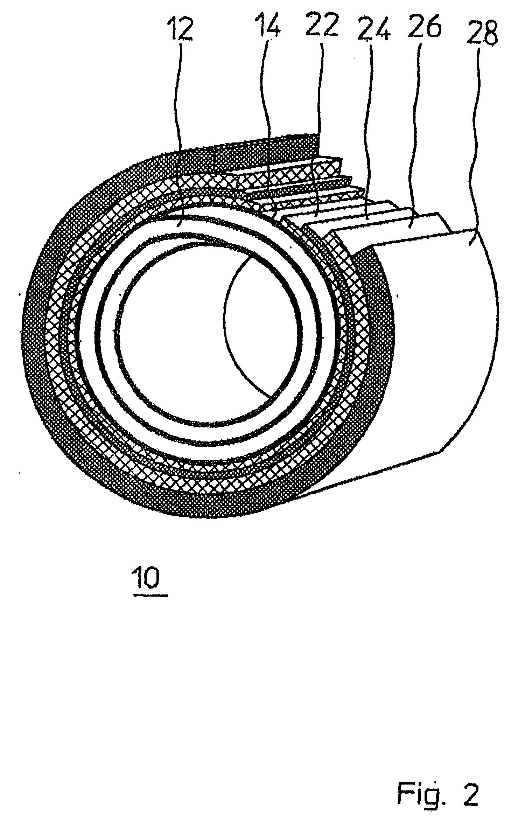

In Fig. 2 ist in entsprechender Weise wie bei Fig. 1 ein Metallrohr 12 aus einer Aluminiumlegierung geformt worden. Die erste Schicht 14 wird ebenfalls von einer Nickellegierung gebildet und wie bei der ersten Ausführungsform vor der Formgebung und der Wärmebehandlung aufgebracht.

Als zweite Schicht 22 schließt sich eine Metallschicht an die erste Schicht 14 an, die ebenfalls galvanisch aufgebracht wurde. Auf die zweite Schicht 22 ist eine dritte Schicht 24 aus Oxisilan so aufgebracht, dass die zweite Schicht 22 von der dritten Schicht 24 vollständig bedeckt wird.

Auf die dritte Schicht 24 ist eine diese bedeckende vierte Schicht 26 aus Epoxid - Primer - aufgebracht. An die vierte Schicht 26 schließt sich eine fünfte äußere Schicht 28 an, die aus einem thermoplastischen Elastomer besteht.

Die Erfindung zeichnet sich durch die einfache Möglichkeit aus, nicht nur eine Ausführung zu schaffen, die besonders gegen Korrosion beständig ist, sondern zudem auch noch äußerst leicht bauend ausgeführt ist.

Des Weiteren können bekannte Formgebungsverfahren zur Herstellung des Metallrohres 12 weiterhin eingesetzt werden. Die Schichten können mit bekannten Verfahren aufgebracht werden. Beispielsweise ist die erste Schicht 14, sowie die Metallschicht 22 durch Galvanisieren, die äußere Schicht 20, 28 durch Extrudieren, die zweite Schicht 16 sowie die dritte Schicht 24 durch ein Oberflächenbehandlungsverfahren, also durch chemische Reaktion aufbringbar.

Die dritte Schicht 18 und die vierte Schicht 26 können durch Spritzen, Tauchen, Fluten oder ähnliches aufgebracht werden.

**Bezugszeichenliste**

10    Rohranordnung
12    Metallrohr
14    erste Schicht - Nickel/Nickellegierung
16    zweite Schicht - Oxisilan
18    dritte Schicht - UV-aushärtbarer Kunststoff
20    vierte, äußere Schicht - Nylonmaterialien
22    zweite Schicht - Metallschicht
24    dritte Schicht - Oxisilan
26    vierte Schicht - Epoxid
28    fünfte, äußere Schicht - thermoplastisches Elastomer

**Patentansprüche**

1. Rohranordnung zum Leiten von Fluiden mit einem beschichteten, durch Formgebung aus einem Metallband gebildeten, mehrlagigen Metallrohr (12), **dadurch gekennzeichnet, dass** das Metallband aus Aluminium oder einer Aluminiumlegierung besteht mit einer die Außenfläche vollständig bedeckenden ersten Schicht (14) aus Nickel, mit einer die erste Schicht (14) nach Überführung des beschichteten Metallbandes in die Rohrform vollständig überdeckenden zweiten Schicht (16) aus Oxisilan und einer die zweite Schicht vollständig bedeckenden, als Primer dienenden dritten Schicht (18), welche von einer vierten Schicht (20) aus Nylonmaterial vollständig überdeckt ist.

2. Rohrandordnung zum Leiten von Fluiden mit einem beschichteten durch Formgebung aus einem Metallband gebildeten mehrlagigen Metallrohr (12) **dadurch gekennzeichnet, dass** das Metallband aus Aluminium oder einer Aluminiumlegierung besteht mit einer die Außenfläche vollständig bedeckenden ersten Schicht (14) aus Nickel, mit einer die erste Schicht vollständig bedeckenden zweiten Schicht (22) aus Metall, mit einer die zweite Schicht vollständig bedeckenden dritten Schicht (24) aus Oxisilan, einer die dritte Schicht vollständig bedeckenden, als Primer dienenden vierten Schicht (26), welche von einer fünften Schicht (28) aus thermoplastischen Elastomer vollständig überdeckt ist.

3. Rohranordnung nach einem der vorangehenden Ansprüche, **dadurch gekennzeichnet, dass** die jeweils erste Schicht (14) als Lot zum Verbinden der Lagen des Metallrohres (12) dient.

4. Rohranordnung nach einem der vorangehenden Ansprüche, **dadurch gekennzeichnet, dass** die erste Schicht (14) vor dem Formen des Metallrohres (12) galvanisch aufgebracht ist.

5. Rohranordnung nach einem der vorangehenden Ansprüche, **dadurch gekennzeichnet, dass** die die äußere Fläche des Metallrohres (12) überdeckende erste Schicht (14) mit einer Schichtdicke von 3 bis 10 μm vorgesehen ist.

6. Rohranordnung nach einem der vorangehenden Ansprüche, **dadurch gekennzeichnet, dass** die erste Schicht (14) Zusätze, wie Schwefel, Phosphor oder ähnliches, zum Verbessern der Verbindung mit dem Metallrohr (12) enthält.

**Claims**

1. Tube assembly for conveying fluids with a coated multi-layered metal tube (12) formed by moulding from a metal strip, **characterised in that** the metal strip consists of aluminium or an aluminium alloy with a first layer (14) of nickel completely covering the outer surface, with a second layer (16) of oxisilan completely covering the first layer (14) after conversion of the coated metal strip into the tube shape and a third layer (18) completely covering the second layer and serving as a primer, which is completely covered by a fourth layer (20) made from nylon material.

2. Tube assembly for conveying fluids with a coated multilayer metal tube (12) formed by moulding from a metal strip, **characterised in that** the metal strip consists of aluminium or an aluminium alloy with a first layer (14) of nickel completely covering the outer surface, with a second layer (22) of metal completely covering the first layer, with a third layer (24) of oxisilan completely covering the second layer, a fourth layer completely covering the third layer and serving as a primer, which is completely covered by a fifth layer (28) of thermoplastic elastomer.

3. Tube assembly according to one of the previous claims, **characterised in that** the first layer (14) in each case serves as a solder to connect the layers of the metal tube (12).

4. Tube assembly according to one of the previous claims, **characterised in that** the first layer (14) is applied galvanically before the moulding of the metal tube (12).

5. Tube assembly according to one of the previous claims, **characterised in that** the first layer (14) covering the outer surface of the metal tube (12) has a layer thickness of 3 to 10 μm.

6. Tube assembly according to one of the previous claims, **characterised in that** the first layer (14) contains additives such as sulphur, phosphorus or similar to improve the joint with the metal tube (12)

**Revendications**

1. Configuration de tube pour convoyer de la matière fluide avec un tube métallique (12) à plusieurs couches revêtu, constitué par une bande métallique façonnée, **caractérisée par le fait que** la bande métallique est en aluminium ou en alliage d'aluminium, avec une première couche (14) en nickel recouvrant entièrement la surface extérieure, avec une deuxième couche (16) en oxysilane recouvrant entièrement la première couche (14) après l'introduction de la bande métallique revêtue dans le moule du tube et une troisième couche (18) qui sert de primer, recouvre entièrement la deuxième couche et est entièrement recouverte par une quatrième couche (20) en matériau de nylon.

2. Configuration de tube pour convoyer de la matière fluide avec un tube métallique (12) à plusieurs couches revêtu, constitué par une bande métallique façonnée, **caractérisée par le fait que** la bande métallique est en aluminium ou en alliage d'aluminium, avec une première couche (14) en nickel recouvrant entièrement la surface extérieure, avec une deuxième couche (22) en métal recouvrant entièrement la première couche, avec une troisième couche (24) en oxysilane recouvrant entièrement la deuxième couche, avec une quatrième couche (26) qui sert de primer, recouvre entièrement la troisième couche et est entièrement recouverte par une cinquième couche (28) en élastomère thermoplastique.

3. Configuration de tube selon l'une des revendications précédentes, **caractérisée par le fait que** la première couche respective (14) sert de métal d'apport pour l'assemblage des couches du tube métallique (12).

4. Configuration de tube selon l'une des revendications précédentes, **caractérisée par le fait que** la première couche (14) est appliquée galvaniquement avant le façonnage du tube métallique (12).

5. Configuration de tube selon l'une des revendications précédentes, **caractérisée par le fait que** la première couche (14) recouvrant la surface extérieure du tube métallique (12) est prévue avec une épaisseur de 3 à 10 µm.

6. Configuration de tube selon l'une des revendications précédentes, **caractérisée par le fait que** la première couche (14) contient des additifs tels que soufre, phosphore ou autre, pour améliorer l'assemblage avec le tube métallique (12).

10

Fig. 1

10

Fig. 2